# FASCICULE DE BREVET EUROPEEN

(11) **EP 1 672 849 B1**
(45) Date de publication et mention de la délivrance du brevet: **19.10.2011**
(21) Numéro de dépôt: 05292613.6
(22) Date de dépôt: 08.12.2005
(51) Int. Cl.: H04L 12/46

(54) **Procédé d'exploitation d'un réseau informatique local relié à un réseau distant privé par un tunnel IPsec**
Verfahren für die Benutzung eines LANs verbunden an ein entferntes privates Netz durch einen IPsec Tunnel
Method for using a LAN connected to a remote private network via an IPsec tunnel

(30) Priorité: 16.12.2004 FR 0413413
(43) Date de publication de la demande: 21.06.2006
(73) Titulaire: FRANCE TELECOM, 75015 Paris (FR)
(72) Inventeur: Charles, Olivier, 92140 Clamart (FR); Butti, Laurent, 92130 Issy les Moulineaux (FR); Veysset, Franck, 92130 Issy les Moulineaux (FR)
(74) Mandataire: Desormiere, Pierre-Louis

(56) Documents cités:
- US-A1- 2003 182 363
- US-A1- 2004 177 157

## Description

L'invention concerne, de façon générale, l'exploitation de réseaux liés entre eux, notamment de réseaux informatiques.

Plus précisément, l'invention concerne, selon un premier de ses aspects, un procédé d'exploitation d'un réseau local comportant un terminal local relié à une passerelle d'un réseau distant par un tunnel en mode bloquant, de telle sorte qu'un flux émis par le terminal à destination d'un équipement du réseau local est acheminé vers la passerelle à travers ledit tunnel.

Un tel procédé est par exemple décrit dans la demande de brevet US 2003/182363.

Comme le sait l'homme du métier, une liaison entre deux réseaux peut être de type IP et peut être constituée par le réseau Internet ou par tout autre réseau utilisant les protocoles de l'Internet.

Par ailleurs, comme le sait également l'homme du métier, l'Internet utilise un protocole de sécurité connu sous la dénomination "IPsec", qui est un acronyme tiré de l'anglais "Internet Protocol Security".

La présente invention concerne, dans sa principale application concrète, les ordinateurs en situation de nomadisme lorsqu'ils sont connectés à un réseau privé d'entreprise par le protocole IPsec. Elle s'applique particulièrement bien lorsque le nomade fait du télétravail, c'est-à-dire lorsqu'il est connecté depuis son réseau domestique (le réseau local de son domicile) au réseau distant privé de son entreprise. Le procédé reste néanmoins opérant pour d'autres types de réseaux locaux, comme par exemple les zones de connexion sans fil dites "hot spots wi-fi".

Par convention, la présente description utilise les termes de "terminal" ou de "terminal local" pour désigner l'ordinateur par lequel le nomade se connecte à son réseau local puis au réseau distant privé de l'entreprise.

Le terme "équipement local" désigne tout équipement informatique connecté au réseau local et auquel il est nécessaire de donner accès au terminal pendant ses connexions IPsec. Cet équipement local pourra ainsi être constitué, de manière statistiquement représentative, par une imprimante, mais pourra aussi être constitué par tout type de serveur du réseau local (ftp, telnet, ...) auquel le terminal devra avoir accès pendant ses connexions IPsec.

Les termes de "routeur", "routeur local" et "routeur domestique" désignent un équipement qui est situé à l'entrée du réseau local (ou domestique si l'on envisage le nomade comme un télé-travailleur), et dont les fonctions seront plus précisément définies ultérieurement.

Le terme de "passerelle", et en particulier de "passerelle IPsec", désigne un équipement qui est situé entre le terminal et le réseau distant privé de l'entreprise, qui est notamment en charge de mettre fin aux tunnels, en particulier aux tunnels IPsec, issus des terminaux, et dont les fonctions seront plus précisément définies ultérieurement. Il peut être situé à la frontière du réseau distant et géré par l'entreprise ou par un opérateur de réseaux de télécommunications.

Pour des raisons de sécurité, la plupart des mises en oeuvre du protocole IPsec ne permettent pas au terminal local d'accéder simultanément au réseau local et au réseau distant de l'entreprise. Sans cette interdiction, le terminal serait en situation de "double attachement" et interconnecterait ainsi les deux réseaux, constituant une grave faille de sécurité.

Cette interdiction est assurée par un mode spécifique appelé "mode bloquant" et notamment prévu dans le protocole IPsec.

Le mode bloquant est donc une technique qui permet d'éviter le double attachement d'un terminal local au réseau distant accessible en IPsec (typiquement le réseau privé de l'entreprise) et au réseau local (typiquement le réseau domestique). Pour ce faire, le mode bloquant empêche toute communication du terminal local en dehors du tunnel IPsec, ce qui a pour effet de limiter grandement les risques d'attaques par rebond dans le tunnel IPsec (et donc vers le système d'information de l'entreprise).

Comme le mode bloquant présente le plus grand intérêt pour les entreprises soucieuses de la sécurité, les politiques de sécurité des entreprises accessibles à distance grâce à IPsec prévoient généralement de l'activer par défaut.

En pratique, le mode bloquant est mis en oeuvre dans le logiciel IPsec du terminal, et modifie généralement la configuration de routage du client de manière à envoyer tous les paquets vers une route par défaut qui appartient au plan d'adressage du réseau distant de l'entreprise. Il met également en oeuvre une fonction de filtrage d'accès (typiquement un pare-feu personnel) empêchant toute communication de l'extérieur vers le terminal.

La contrepartie de ce fonctionnement sécuritaire est que le terminal nomade, pendant une connexion à son réseau distant (encore dit "intranet"), ne peut plus accéder aux machines (équipements) qui sont présentes sur le réseau local auquel il est physiquement connecté. Il n'a notamment plus accès à l'imprimante de son réseau local puisque tous les flux de commande et de données sont automatiquement canalisés par le tunnel bloquant vers le réseau distant de l'entreprise.

Une voie connue à ce jour pour contourner ce problème consiste à utiliser la technique dite de "tunnel à aiguillage" (ou "split tunneling"), qui offre la possibilité au terminal local d'adresser directement tout équipement du réseau local en dépit de l'existence

concomitante du tunnel IPsec, et donc d'accéder aux services locaux.

Le problème est que cette technique fait apparaître un risque important de pénétration pirate sur le réseau distant de l'entreprise par rebond sur le terminal, le recours à cette technique étant d'ailleurs fortement découragée, voire interdite, par la plupart des administrateurs de réseaux d'entreprise.

Dans ce contexte, la présente invention a notamment pour but de proposer un procédé permettant au terminal local d'adresser un équipement local en dépit de l'existence concomitante d'une liaison de ce terminal à une passerelle IPsec à travers un tunnel bloquant, cette fonctionnalité étant obtenue sans dégradation de la sécurité offerte par le tunnel bloquant et sans modification ni du terminal local ni de l'équipement local concerné, et notamment pas de l'imprimante.

A cette fin, le procédé de l'invention, par ailleurs conforme à la définition générique qu'en donne le préambule ci-dessus, est essentiellement **caractérisé en ce qu'**il comprend une opération de renvoi, mise en oeuvre dans la passerelle,

d'un flux émis par le terminal, acheminé à travers ledit tunnel et non destiné audit réseau distant, consistant à renvoyer le flux considéré vers un routeur appartenant au réseau local, en vue de la redirection du flux considéré par ledit routeur vers un équipement du réseau local auquel le flux considéré est destiné, ledit routeur étant identifié à partir d'une information obtenue par la passerelle lors de l'établissement du tunnel.

Bien que la demande de brevet US 2004/177157 décrive un procédé de gestion d'adresses, cette demande n'enseigne pas la redirection d'un flux de données vers un équipement d'un réseau local.

L'opération de renvoi peut par exemple comporter la réception dudit flux par un routeur du réseau local, et l'aiguillage par ledit routeur dudit flux vers ledit équipement.

L'opération de renvoi peut également comporter l'analyse par la passerelle des flux de sorte à reconnaître un flux non destiné audit réseau distant.

L'invention, dans une définition particulière et très détaillée, peut ainsi prendre la forme d'un procédé d'exploitation d'un réseau informatique local dans une configuration comprenant, outre ce réseau local,
- un réseau informatique distant privé auquel le réseau local est connecté à travers un réseau de liaison de type IP,
- un routeur local disposé à l'interface entre le réseau local et le réseau de liaison, et
- une passerelle IPsec disposée à l'interface entre le réseau distant et le réseau de liaison,
   le réseau local comprenant au moins un terminal local et un équipement informatique local, et le terminal étant relié à la passerelle IPsec par un tunnel IPsec en mode bloquant,
   ce procédé permettant le ré-acheminement automatique, vers la passerelle et à travers le tunnel en mode bloquant, d'un flux de commande et / ou de données émanant du terminal à destination de l'équipement local, et comprenant à cette fin :

- une opération d'analyse, mise en oeuvre dans la passerelle à réception par elle du flux de commande et / ou de données émanant du terminal à destination de l'équipement local et consistant à reconnaître que ce flux n'est pas destiné au réseau distant,
- une opération de renvoi mise en oeuvre dans la passerelle et consistant à renvoyer vers le routeur local le flux de commande et / ou de données émanant du terminal et
- une opération d'aiguillage, mise en oeuvre dans le routeur local et consistant à aiguiller vers ledit équipement local le flux de commande et / ou de données provenant du terminal local et renvoyé par la passerelle vers le routeur local.

Dans le cas où le routeur local, auquel est attribuée une adresse routable, substitue à une adresse du terminal interne au réseau local sa propre adresse routable lors d'une requête de connexion au réseau distant privé émanant du terminal à destination de la passerelle, et où la passerelle IPsec attribue au terminal local une adresse interne au réseau distant lors de l'établissement du tunnel bloquant, le procédé peut en outre comprendre une opération de corrélation mise en oeuvre dans la passerelle lors de l'établissement du tunnel bloquant et consistant à mémoriser une table de correspondance mettant l'adresse routable du routeur local et l'adresse du terminal interne au réseau distant en correspondance l'une avec l'autre, l'opération de renvoi du flux de commande et / ou de données utilisant la table de correspondance et consistant à renvoyer vers l'adresse routable du routeur local le flux de commande et / ou de données émanant du terminal identifié par l'adresse interne au réseau distant.

L'opération d'aiguillage est de préférence mise en oeuvre par une technique de traduction de port.

Le flux de commande et / ou de données peut par exemple comprendre une commande d'impression.

Le procédé peut comprendre une opération supplémentaire, mise en oeuvre par la passerelle, et consistant à établir un second tunnel, de type IPsec ou SSL, reliant cette passerelle au routeur local.

En variante, l'opération mise en oeuvre par la passerelle peut consister à établir un second tunnel, de type IPsec ou SSL, reliant cette passerelle à l'équipement local, en l'occurrence constitué par une imprimante.

Par ailleurs, le procédé de l'invention peut comprendre une opération mise en oeuvre par le routeur local et consistant à réserver à la passerelle l'accès à l'équipement local, en l'occurrence constitué par une imprimante.

L'invention concerne également un module logiciel comprenant des instructions qui, une fois ce module chargé sur une passerelle IPsec, mettent au moins en oeuvre l'opération de corrélation du procédé tel que précédemment défini, ces instructions pouvant en outre mettre en oeuvre l'opération d'analyse et l'opération de renvoi de ce procédé.

L'invention concerne encore une passerelle IPsec pour un réseau distant, cette passerelle comprenant un module logiciel tel que précédemment défini.

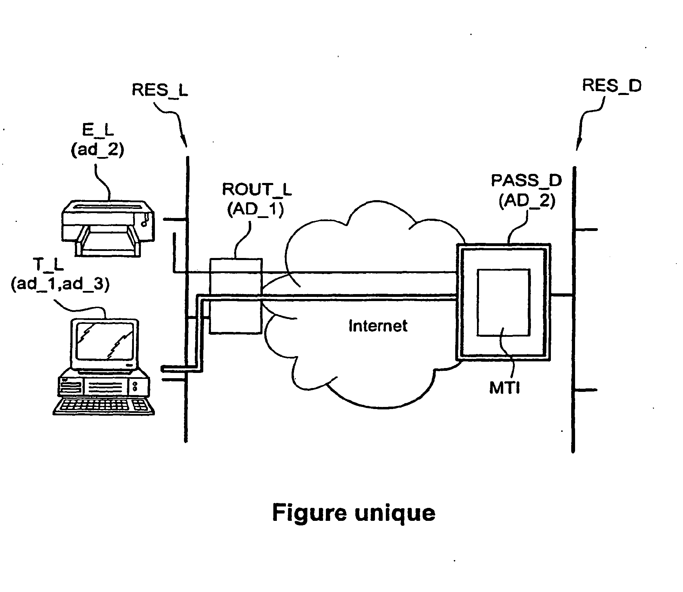

D'autres caractéristiques et avantages de l'invention ressortiront clairement de la description qui en est faite ci-après, à titre indicatif et nullement limitatif, en référence à la figure unique, qui représente schématiquement l'architecture et les moyens mis en oeuvre dans l'invention.

Comme indiqué précédemment, l'invention concerne notamment un procédé d'exploitation d'un réseau informatique local RES_L, par exemple un réseau domestique, dans la configuration représentée sur la figure et comprenant, outre ce réseau local RES_L, un réseau informatique distant privé RES_D, par exemple un réseau ou "intranet" d'entreprise, un routeur local ROUT_L, et une passerelle IPsec PASS_D, le réseau local RES_L comprenant lui-même au moins un terminal local T_L et un équipement informatique local E_L tel qu'une imprimante ou un serveur adapté à tout type de service domestique sur IP auquel le terminal T_L doit pouvoir accéder en permanence, par exemple ftp, telnet, etc.

Le terminal T_L est configuré avec une liste de périphériques E_L, tels que des imprimantes sur lesquelles il peut lancer des impressions, et notamment l'imprimante du réseau local. Il met également en oeuvre le protocole IPsec pour se connecter à la passerelle IPsec PASS_D.

Le logiciel IPsec est supposé ne fonctionner qu'en mode bloquant et donc ne pas autoriser les tunnels à aiguillage (split tunneling).

Le routeur local ROUT_L, qui est situé à l'entrée du réseau local RES_L, remplit plusieurs fonctions, à savoir :
- établir la connexion physique (RNIS, câble, XDSL...) du terminal T_L à l'Internet;
- accepter les communications des différents équipements E_L du réseau local RES_L (PC, imprimante, scanner, décodeurs...); généralement ces connexions se font en Ethernet filaire ou sans fil ([IEEE802.11]);
- traduire les adresses internes ([RFC1918]) du terminal T_L et des équipements E_L en une adresse routable; si par exemple le terminal T_L et une imprimante E_L ont dans le réseau local RES_L des adresses internes respectives ad_1 et ad_2, le routeur ROUT_T traduit, lors d'une connexion sur Internet, ces adresses internes en l'adresse routable AD_1 qui est celle que ce routeur a obtenue lors de sa connexion au réseau du fournisseur d'accès à Internet. Ce procédé de traduction est connu de l'homme du métier sous le nom de NAT/NAPT (Network Address Translation, Network Address Port Translation), [RFC3022]. Il consiste à maintenir une table de correspondance entre les couples (adresse IP interne, numéro de port interne) et les couples (adresse IP externe, numéro de port externe). Pour chaque paquet d'informations adressé au routeur ROUT_L ou émis par lui, la traduction est effectuée selon cette table; et
- mettre en oeuvre une technique de traduction de port (connue de l'homme du métier sous le nom de "port forwarding"), qui consiste à définir statiquement une association entre un port externe du routeur et un port interne de ce routeur, et qui permet aux machines externes au réseau local RES_L d'accéder à des serveurs internes à ce réseau local en les interrogeant sur des numéros de ports connus du routeur.

La passerelle IPsec PASS_D, qui est située entre le terminal T_L et le réseau RES_D de l'entreprise, est en charge de terminer les tunnels IPsec issus des terminaux. Elle possède des fonctions de routage des paquets et est donc ouverte sur l'Internet par une interface et sur le réseau privé RES_D par une autre interface.

La passerelle PASS_D, à laquelle est par exemple affectée une adresse routable AD_2, attribue au terminal T_L une adresse ad_3 interne au réseau distant RES_D lors de l'établissement du tunnel IPsec bloquant entre ce terminal et cette passerelle.

En plus des passerelles IPsec classiques, la passerelle de l'invention comporte un module logiciel MTI qui offre au terminal T_L un accès à l'équipement E_L ou aux équipements locaux du réseau RES_L, d'une façon qui est spécifique à l'invention et qui sera décrite plus en détails ultérieurement.

La mise en oeuvre du procédé de l'invention se fonde sur les hypothèses suivantes.

Le réseau local RES_L utilise un plan d'adressage dit "privé", c'est-à-dire conforme à la norme RFC1918. Ceci correspond en fait au choix que font par défaut les constructeurs de routeurs domestiques ROUT_L; ce réseau met en oeuvre un serveur DHCP qui attribue des adresses IP sur une plage d'adresses "privées".

Le réseau distant RES_D, par exemple le réseau de l'entreprise, n'utilise pas le même adressage de sous-réseau que celui utilisé sur le réseau domestique RES_L. A tout le moins, si un tel recouvrement existe, l'ambiguïté quant au réseau sollicité est levée par la prise en compte de l'origine de la requête.

Par exemple, si le réseau 10.0.0.X est utilisé à la fois dans l'entreprise et dans le réseau domestique, alors:
- si c'est une machine du réseau d'entreprise RES_D qui envoie un paquet à l'adresse 10.0.0.3, alors l'équipement destinataire est une machine du réseau d'entreprise RES_D, et
- si c'est une machine du réseau local RES_L qui envoie un paquet à l'adresse 10.0.0.3, alors l'équipement destinataire est une machine du réseau local RES_L.

La passerelle IPsec PASS_D peut faire cette discrimination dans la mesure où elle a connaissance des deux plans d'adressage et où elle est en coupure entre les deux réseaux.

Le procédé de l'invention repose sur les principes suivants.

La passerelle IPsec PASS_D est le routeur par défaut de tous les terminaux T_L des réseaux domestiques tels que RES_L. Ainsi, lorsqu'un terminal T_L va par exemple commander un travail d'impression sur son imprimante locale E_L, l'ordre d'impression sera envoyé systématiquement vers la passerelle IPsec PASS_D, puisque l'imprimante E_L n'est pas joignable à cause du tunnel établi en mode bloquant entre le terminal T_L et la passerelle PASS_D. Ce comportement est le comportement normal d'une pile IP parce que le mode bloquant IPsec modifie la table de routage du client en forçant tous les paquets à aller vers le réseau d'entreprise RES_D.

Lorsque la passerelle IPsec PASS_D voit arriver des paquets IP adressés par le terminal T_L à l'équipement local E_L identifié par son adresse interne ad_2, elle constate qu'elle ne peut pas les acheminer sur le réseau d'entreprise RES_D. En effet, compte tenu des hypothèses ci-dessus, l'adresse ad_2 de destination sollicitée n'appartient pas au réseau RES_D de l'entreprise, ou tout au moins, un terminal domestique T_L n'a aucune raison de solliciter une telle adresse. La passerelle PASS_D en déduit alors qu'elle doit renvoyer les paquets vers le réseau domestique RES_L.

Pour pouvoir ré-acheminer ce trafic, la passerelle PASS_D a cependant besoin de savoir vers quel routeur domestique ROUT_L il doit l'être.

Selon l'invention, cette information est construite par le module logiciel MTI, au moment du montage du tunnel IPsec préalablement établi entre le terminal T_L et la passerelle IPsec PASS_D.

En effet, lors de l'établissement de ce tunnel IPsec, et à cause du mécanisme de NAT mis en oeuvre dans le routeur domestique ROUT_L, c'est l'adresse publique AD_1 de ce routeur qui a été utilisée lors de l'établissement du tunnel IPsec.

A la suite de quoi, la passerelle IPsec PASS_D a attribué au terminal T_L une adresse interne ad_3 du plan d'adressage de l'entreprise. La passerelle IPsec PASS_D connaît donc le lien entre l'adresse ad_3 du terminal T_L sur le plan d'adresse interne de l'entreprise et l'adresse publique AD_1 du routeur domestique ROUT_L, le module logiciel MTI ayant notamment pour fonction de garder trace de cette correspondance.

Par conséquent, lorsque la passerelle IPsec PASS_D reçoit des paquets IP en provenance du terminal nomade T_L et qu'elle doit renvoyer ces paquets vers le réseau domestique RES_L, elle connaît parfaitement l'adresse publique AD_1 du routeur domestique ROUT_L.

Le routeur domestique ROUT_L met classiquement en oeuvre un mécanisme de traduction de port (ou "port forwarding"), de sorte qu'il est capable, lorsqu'il reçoit des connexions depuis l'Internet sur un port particulier, de faire une traduction d'adresse vers un équipement local E_L interne sur un numéro de port particulier. Par exemple ici, tous les paquets reçus en provenance de l'Internet et sur le port d'impression correspondant à l'adresse ad_2 peuvent être retransmis directement sur le port de l'imprimante interne E_L.

Cette technique peut être utilisée avec tous les protocoles d'impression existants, notamment IPP décrit ci-dessous.

De nouveaux standards ont été définis dans le cadre de travaux à l'IETF, en l'occurrence dans le groupe de travail PWG (the Printer Working Group [IETF-IPP]), où le protocole IPP (Internet Printing Protocol, [RFC 2910], [RFC 2911]) spécifie des extensions au protocole HTTP/1.1, et offre donc des solutions modernes et performantes d'impression locale et distante.

Un état de l'art des protocoles d'impression est disponible sur le site Internet http://www.cups.org/overview.html.

L'un des protocoles actuellement les plus utilisés est le protocole IPP précédemment évoqué, car il est notamment supporté par une majorité d'équipements. Son fonctionnement est simple, car très proche du protocole HTTP. Il fonctionne comme ce dernier selon un mode client serveur, le client accédant à l'imprimante distante généralement sur le port 80/TCP.

Le contenu fonctionnel du module logiciel MTI de traitement des demandes d'impression et de la passerelle IPsec PASS_D sur laquelle ce module est chargé sera maintenant décrit plus en détail.

Lorsque le terminal T_L monte son tunnel IPsec, il participe à un échange IKE (RFC2409) avec la passerelle IPsec PASS_D, durant lequel la passerelle IPsec reçoit des paquets IP dont l'adresse source est l'adresse IP publique du routeur domestique ROUT_L, c'est-à-dire AD_1.

En effet, lors de la traversée du routeur ROUT_L, l'adresse AD_1 de ce routeur est systématiquement substituée à l'adresse interne ad_1 du terminal T_L.

La passerelle IPsec PASS_D attribue au terminal T_L une adresse IP dynamique, notée ad_3, appartenant au plan d'adressage du réseau RES_D de l'entreprise.

La passerelle IPsec, qui connaît l'adresse publique AD_1 du routeur ROUT_L du réseau local RES_L, et l'adresse ad_3 attribuée dynamiquement au terminal T_L, envoie au module MTI un message de mise à jour de la table de correspondance qui associe ces deux adresses.

A réception du message de mise à jour de la table de correspondance avec les adresses AD_1 et ad_3, le module logiciel MTI réalise la mise à jour de la table.

Lorsque le terminal T_L lance un travail d'impression, il choisit comme imprimante de destination l'imprimante E_L du réseau local RES_L, comme il le ferait dans une situation plus simple où aucun tunnel IPsec n'est établi.

En raison du mode bloquant du tunnel IPsec, le flux de commande et de données émanant du terminal T_L à destination de l'imprimante E_L est canalisé par le tunnel vers la passerelle IPsec PASS_D.

Lorsqu'elle voit arriver ce trafic acheminé à travers le tunnel IPsec et à destination d'une machine dont l'adresse ad_2 appartient à un réseau qui n'est pas le réseau RES_D de l'entreprise, la passerelle IPsec PASS_D demande au module logiciel MTI vers quel routeur domestique rediriger ce trafic. Pour ce faire, la passerelle PASS_D indique au module MTI l'adresse du terminal T_L tel qu'il est vu sur le réseau RES_D de l'entreprise, c'est-à-dire avec l'adresse ad_3 qui lui a été attribuée lors de l'échange IKE.

Le module MTI consulte la table de correspondance et, à partir de l'adresse ad_3 du terminal T_L, déduit l'adresse publique AD_1 du routeur domestique ROUT_L.

La passerelle IPsec met à jour sa table de routage avec cette nouvelle destination et transmet l'ordre d'impression au routeur domestique ROUT_L. En d'autres termes, la passerelle PASS_D réalise alors le relais de tous les paquets reçus vers l'adresse IP publique, c'est-à-dire AD_1, du routeur domestique ROUT_L.

Lorsqu'il reçoit ce flux, le routeur domestique le redirige vers l'imprimante E_L grâce au mécanisme de traduction de port ("port forwarding").

Lorsque le terminal T_L clôt la session IPsec, ou lorsque la passerelle IPsec PASS_D détecte que le terminal T_L est déconnecté, celle-ci demande au module MTI de supprimer de sa table l'entrée qui correspond au terminal T_L et purge aussi de sa table de routage la ligne correspondant à ce terminal.

Comme le comprendra l'homme du métier à la lecture de ce qui précède, le procédé de l'invention permet de s'affranchir du mécanisme de tunnel à aiguillage (ou "split tunneling") tout en offrant la possibilité de contacter des machines locales appartenant au réseau RES_L du terminal T_L, et ce de manière parfaitement sécurisée. Il n'ouvre aucune brèche dans la sécurité du réseau de l'entreprise

Ce procédé n'impose aucune modification ou configuration ni sur l'imprimante E_L, ni sur le routeur domestique ROUT_L, ni sur le terminal T_L.

De plus, il permet de bénéficier des fonctions avancées des imprimantes car les paramètres de l'imprimante locale restent valides, même si l'impression passe par le réseau RES_D de l'entreprise.

Au lieu de passer en clair sur l'Internet, le flux circulant de la passerelle IPsec PASS_D vers le réseau domestique RES_L peut être protégé contre les écoutes par un autre tunnel IPsec établi entre cette passerelle et le routeur ROUT_L. Ce tunnel est monté à l'initiative de la passerelle IPsec lorsqu'elle souhaite ré-acheminer un flux vers le réseau domestique RES_L. Dans ce cas, le routeur domestique doit être configuré de façon à accepter le montage du tunnel sans intervention de l'utilisateur.

Le flux circulant de la passerelle IPsec PASS_D vers le réseau domestique RES_L peut aussi être protégé contre les écoutes par un tunnel SSL établi entre la passerelle IPsec et l'imprimante E_L, dans le cas où cette imprimante a la capacité à dialoguer en SSL. Cette fonctionnalité peut donc être mise à profit dans la présente invention.

Dans les deux cas, cela permet de protéger le réseau domestique RES_L des intrusions en authentifiant la passerelle IPsec, et de garantir la confidentialité des données échangées grâce au chiffrement.

Enfin, comme la plupart des routeurs domestiques ROUT_L autorisent la mise en place de règles de pare-feu de base (firewall simple), il est possible de mettre en place une règle statique de façon à réserver à la passerelle IPsec PASS_D l'accès à l'imprimante E_L (via le mécanisme de traduction de port), ce qui apporte un niveau de sécurité supérieur en protégeant le réseau local RES_L.

## Revendications

1. Procédé d'exploitation d'un réseau local (RES_L) comportant un terminal local (T_L) relié à une passerelle (PASS_D) d'un réseau distant (RES_D) par un tunnel en mode bloquant, de telle sorte qu'un flux émis par le terminal (T_L) à destination d'un équipement (E_L) du réseau local (RES_L) est acheminé vers la passerelle (PASS_D) à travers ledit tunnel, **caractérisé en ce qu'**il comprend :
- une opération de renvoi, mise en oeuvre dans la passerelle (PASS_D), d'un flux émis par le terminal (T_L), acheminé à travers ledit tunnel et non destiné audit réseau distant, consistant à renvoyer le flux considéré vers un routeur (ROUT_L) appartenant au réseau local, en vue de la redirection du flux considéré par ledit routeur vers un équipement du réseau local auquel le flux considéré est destiné, ledit routeur (ROUT_L) étant identifié à partir d'une information obtenue par la passerelle (PASS_D) lors de l'établissement du tunnel.

2. Procédé selon la revendication 1, **caractérisé en ce que** l'opération de renvoi comporte :
- la réception dudit flux par ledit routeur (ROUT_L),
- l'aiguillage par ledit routeur (ROUT_L) dudit flux vers ledit équipement (E_L).

3. Procédé selon l'une quelconque des revendications précédentes, **caractérisé en ce que** l'opération de renvoi comporte :
- l'analyse par la passerelle (PASS_D) des flux, de sorte à reconnaître un flux non destiné audit réseau distant (RES_D).

4. Procédé selon l'une quelconque des revendications 1 à 3, dans lequel le routeur local (ROUT_L), auquel est attribuée une adresse routable (AD_1), substitue à une adresse (ad_1) du terminal (T_L) interne au réseau local sa propre adresse routable (AD_1) lors d'une requête de connexion au réseau distant privé (RES_D) émanant du terminal (T_L) à destination de la passerelle (PASS_D), et dans lequel la passerelle (PASS_D) attribue au terminal local une adresse (ad_3) interne au réseau distant (RES_D) lors de l'établissement du tunnel bloquant, ce procédé comprenant en outre une opération de corrélation mise en oeuvre dans la passerelle (PASS_D) lors de l'établissement du tunnel bloquant et consistant à mémoriser une table de correspondance mettant l'adresse routable (AD_1) du routeur local et l'adresse (ad_3) du terminal interne au réseau distant en correspondance l'une avec l'autre, l'opération de renvoi du flux utilisant la table de correspondance et consistant à renvoyer vers l'adresse routable (AD_1) du routeur local le flux émanant du terminal (T_L) identifié par l'adresse (ad_3) interne au réseau distant.

5. Procédé suivant l'une quelconque des revendications précédentes combinée à la revendication 2, **caractérisé en ce que** l'opération d'aiguillage est mise en oeuvre par une technique de traduction de port.

6. Procédé suivant l'une quelconque des revendications 1 à 5, **caractérisé en ce que** le flux renvoyé comprend une commande d'impression.

7. Procédé suivant l'une quelconque des revendications précédentes combinée à la revendication 2, **caractérisé en ce qu'**il comprend une opération mise en oeuvre par la passerelle (PASS_D) et consistant à établir un second tunnel, de type IPsec ou SSL, reliant cette passerelle (PASS_D) au routeur local (ROUT_L).

8. Procédé suivant l'une quelconque des revendications 1 à 6, **caractérisé en ce qu'**il comprend une opération mise en oeuvre par la passerelle (PASS_D) et consistant à établir un second tunnel, de type IPsec ou SSL, reliant cette passerelle (PASS_D) à l'équipement local (E_L, ad_2) constitué par une imprimante.

9. Procédé suivant l'une quelconque des revendications précédentes combinée à la revendication 2, **caractérisé en ce qu'**il comprend une opération mise en oeuvre par le routeur local (ROUT_L) et consistant à réserver à la passerelle (PASS_D) l'accès à l'équipement local (E_L, ad_2) constitué par une imprimante.

10. Module logiciel (MTI), **caractérisé en ce qu'**il comprend des instructions qui, une fois ce module chargé sur une passerelle (PASS_D) d'un réseau distant, mettent au moins en oeuvre l'opération de renvoi du procédé suivant l'une quelconque des revendications 1 à 9.

11. Passerelle pour un réseau distant, **caractérisée en ce qu'**elle comprend un module logiciel (MTI) suivant la revendication 10.

12. Passerelle selon la revendication 11, **caractérisée en ce que** la passerelle est une passerelle (PASS_D) IPsec.

## Claims

1. Method for operating a local area network (RES_L) comprising a local terminal (T_L) linked to a gateway (PASS_D) of a remote network (RES_D) by a tunnel in blocking mode, such that a flow sent by the terminal (T_L) to an piece of equipment (E_L) of the local area network (RES_L) is routed to the gateway (PASS_D) through said tunnel, **characterized in that** it comprises:
- a send back operation, implemented in the gateway (PASS_D), for sending back a flow sent by the terminal (T_L), routed through said tunnel and not intended for said remote network, consisting in sending back the concerned flow to a router (ROUT_L) belonging to the local area network, in order for the concerned flow to be redirected by said router to a piece of equipment of the local area network for which the concerned flow is intended, said router (ROUT_L) being identified on the basis of information obtained by the gateway (PASS_D) on setting up the tunnel.

2. Method according to Claim 1, **characterized in that** the send back operation comprises:
- the receipt of said flow by said router (ROUT L),
- the directing by said router (ROUT_L) of said flow toward said piece of equipment (E_L).

3. Method according to any one of the preceding claims, **characterized in that** the send back operation comprises:
- the analysis by the gateway (PASS_D) of the flows, so as to recognize a flow not intended for said remote network (RES_D).

4. Method according to any one of Claims 1 to 3, in which the local router (ROUT_L), to which a routable address (AD_1) is assigned, substitutes its own routable address (AD-_1) for an address (ad_1) of the terminal (T_L) internal to the local area network upon a request to connect to the remote private network (RES_D) from the terminal (T_L) to the gateway (PASS_D), and in which the gateway (PASS_D) assigns the local terminal an address (ad_3) internal to the remote network (RES_D) during the establishment of the blocking tunnel, this method also comprising a correlation operation implemented in the gateway (PASS_D) during the establishment of the blocking tunnel and consisting in storing a mapping table mapping the routable address (AD_1) of the local router and the address (ad_3) of the terminal internal to the remote network to one another, the flow send back operation using the mapping table and consisting in sending back the flow from the terminal (T_L) identified by the address (ad_3) internal to the remote network to the routable address (AD_1) of the local router.

5. Method according to any one of the preceding claims in combination with Claim 2, **characterized in that** the switching operation is implemented by a port translation technique.

6. Method according to any one of Claims 1 to 5, **characterized in that** the sent back flow includes a print command.

7. Method according to any one of the preceding claims in combination with Claim 2, **characterized in that** it includes an operation implemented by the gateway (PASS_D) and consisting in setting up a second tunnel, of IPsec or SSL type, linking this gateway (PASS_D) to the local router (ROUT_L).

8. Method according to any one of Claims 1 to 6, **characterized in that** it includes an operation implemented by the gateway (PASS_D) and consisting in setting up a second tunnel, of IPsec or SSL type, linking this gateway (PASS_D) to the local piece of equipment (E_L, ad_2) consisting of a printer.

9. Method according to any one cf the preceding claims in combination with Claim 2, **characterized in that** it comprises an operation implemented by the local router (ROUT_L) and consisting in reserving for the gateway (PASS_D) the access to the local piece of equipment (E_L, ad_2) consisting of a printer.

10. Software module (MTI), **characterized in that** it comprises instructions which, once this module is loaded on a gateway (PASS_D) of a remote network, at least implement the send back operation of the method according to any one of Claims 1 to 9.

11. Gateway for a remote network, **characterized in that** it comprises a software module (MTI) according to Claim 10.

12. Gateway according to Claim 11, **characterized in that** the gateway (PASS_D) is an IPsec gateway.

## Patentansprüche

1. Verfahren für den Betrieb eines lokalen Netzes (RES__L), das ein lokales Endgerät (T_L) aufweist, welches mit einem Gateway (PASS_D) eines fernen Netzes (RES_D) über einen Tunnel im blockierenden Modus verbunden ist, so dass ein vom Endgerät (T_L) an eine Einrichtung (E_L) des lokalen Netzes (RES_L) gesendeter Fluss über den Tunnel zum Gateway (PASS_D) befördert wird, **dadurch gekennzeichnet, dass** es enthält:
- einen im Gateway (PASS_D) durchgeführten Umleitvorgang eines vom Endgerät (T_L) gesendeten, über den Tunnel beförderten und nicht für das ferne Netz bestimmten Flusses, der darin besteht, den betreffenden Fluss an einen zum lokalen Netz gehörenden Router (ROUT_L) umzuleiten, um den betroffenen Fluss durch den Router zu einer Einrichtung des lokalen Netzes weiterzuleiten, für die der betreffende Fluss bestimmt ist, wobei der Router (ROUT_L) ausgehend von einer beim Einrichten des Tunnels vom Gateway (PASS_D) erhaltenen Information identifiziert wird.

2. Verfahren nach Anspruch 1, **dadurch gekennzeichnet, dass** der Umleitvorgang aufweist:
- den Empfang des Flusses durch den Router (ROUT_L),
- das Lenken des Flusses zur Einrichtung (E_L) durch den Router (ROUT_L).

3. Verfahren nach einem der vorhergehenden Ansprüche, **dadurch gekennzeichnet, dass** der Umleitvorgang aufweist:
- die Analyse der Flüsse durch das Gateway (PASS_D), um einen nicht für das ferne Netz (RES_D) bestimmten Fluss zu erkennen.

4. Verfahren nach einem der Ansprüche 1 bis 3, bei dem der lokale Router (ROUT L), dem eine routingfähige Adresse (AD_1) zugeteilt ist, eine Adresse (ad_1) des Endgeräts (T_L) innerhalb des lokalen Netzes bei einer Verbindungsanforderung mit dem privaten fernen Netz (RES_D), die von dem Endgerät (T_L) an das Gateway (PASS_D) gerichtet wird, durch seine eigene routingfähige Adresse (AD_1) ersetzt, und bei dem das Gateway (PASS_D) dem lokalen Endgerät beim Einrichten des blockierenden Tunnels eine Adresse (ad_3) innerhalb des fernen Netzes (RES_D) zuweist, wobei dieses Verfahren außerdem einen Korrelationsvorgang enthält, der im Gateway (PASS_D) beim Einrichten des blockierenden Tunnels durchgeführt wird und darin besteht, eine Korrespondenztabelle zu speichern, die die routingfähige Adresse (AD_1) des lokalen Routers und die Adresse (ad_3) des Endgeräts innerhalb des fernen Netzes miteinander verbindet, wobei der Umleitvorgang des Flusses die Korrespondenztabelle verwendet und darin besteht, an die routingfähige Adresse (AD_1) des lokalen Routers den Fluss, der von dem durch die Adresse (ad_3) innerhalb des fernen Netzes identifizierten Endgerät (T_1) stammt, umzuleiten.

5. Verfahren nach einem der vorhergehenden Ansprüche kombiniert mit Anspruch 2, **dadurch gekennzeichnet, dass** der Umlenkvorgang durch eine Technik der Anschluss-Umsetzung durchgeführt wird.

6. Verfahren nach einem der Ansprüche 1 bis 5, **dadurch gekennzeichnet, dass** der umgeleitete Fluss einen Druckbefehl enthält.

7. Verfahren nach einem der vorhergehenden Ansprüche kombiniert mit Anspruch 2, **dadurch gekennzeichnet, dass** es einen Vorgang enthält, der vom Gateway (PASS_D) durchgeführt wird und darin besteht, einen zweiten Tunnel vom Typ IPsec oder SSL einzurichten, der dieses Gateway (PASS_D) mit dem lokalen Router (ROUT_L) verbindet.

8. Verfahren nach einem der Ansprüche 1 bis 6, **dadurch gekennzeichnet, dass** es einen Vorgang enthält, der vom Gateway (PASS_D) durchgeführt wird und darin besteht, einen zweiten Tunnel vom Typ IPsec oder SSL einzurichten, der dieses Gateway (PASS_D) mit der lokalen Einrichtung (E_L, ad_2) verbindet, die aus einem Drucker besteht.

9. Verfahren nach einem der vorhergehenden Ansprüche kombiniert mit Anspruch 2, **dadurch gekennzeichnet, dass** es einen Vorgang enthält, der vom lokalen Router (ROUT_L) durchgeführt wird und darin besteht, für das Gateway (PASS_D) den Zugriff auf die lokale Einrichtung (E_L, ad_2) zu reservieren, die aus einem Drucker besteht.

10. Softwaremodul (MT1), **dadurch gekennzeichnet, dass** es Anweisungen enthält, die, wenn dieses Modul in ein Gateway (PASS_) eines fernen Netzes geladen ist, mindestens den Umleitvorgang des Verfahrens nach einem der Ansprüche 1 bis 9 durchführen.

11. Gateway für ein fernes Netz, **dadurch gekennzeichnet, dass** es ein Softwaremodul (MTI) nach Anspruch 10 enthält.

12. Gateway nach Anspruch 11, **dadurch gekennzeichnet, dass** das Gateway (PASS_D) ein IPsec-Gateway ist.
